# EUROPÄISCHE PATENTSCHRIFT

(11) **EP 2 964 970 B1**
(45) Veröffentlichungstag und Bekanntmachung des Hinweises auf die Patenterteilung: **04.10.2017**
(21) Anmeldenummer: 14704137.0
(22) Anmeldetag: 11.02.2014
(51) Int. Cl.: F16D 3/223, F16D 3/224, F16D 3/227

(54) **GLEICHLAUFGELENK**
CONSTANT VELOCITY JOINT
JOINT HOMOCINÉTIQUE

(30) Priorität: 06.03.2013 DE 102013003859
(43) Veröffentlichungstag der Anmeldung: 13.01.2016
(73) Patentinhaber: Volkswagen Aktiengesellschaft, 38440 Wolfsburg (DE)
(72) Erfinder: GUITART GONZÁLEZ, Daniel, 38104 Braunschweig (DE); SCHAAF, Gregor, 38162 Cremlingen (DE); RABE, Marco, 99735 Kleinwechsungen (DE); UHLE, Michael, 38446 Wolfsburg (DE)
(86) Internationale Anmeldenummer: PCT/EP2014/052667
(87) Internationale Veröffentlichungsnummer: WO 2014/135343

(56) Entgegenhaltungen:
- WO-A1-2012/093537
- DE-A1-102006 058 860
- DE-A1-102009 017 181
- JP-A- H03 172 621
- US-A- 5 026 325

## Beschreibung

Die Erfindung bezieht sich auf ein Gleichlaufgelenk nach dem Oberbegriff von Patentanspruch 1.

An Vorderachsseitenwellen von Kraftfahrzeugen werden als radseitige Gleichlauffestgelenke oftmals sogenannte Rzeppagelenke - beispielsweise in UF/RF Bauart - eingesetzt, deren Kugellaufbahnen in Radialebenen verlaufen, die die jeweilige Gelenkbauteilmittelachse einschließen. Beim Beugen des Gelenks werden die Kugeln durch den Käfig in eine Halbwinkelebene gesteuert, die zwischen den im Fall einer Beugung des Gelenks zueinander angewinkelten Mittelachsen des Gelenkaußenteils und des Gelenkinnenteils aufgespannt wird. Bei kleinen Beugewinkeln weisen die hierbei auftretenden Axialkräfte der Kugeln in die gleiche Richtung und werden vom Käfig aufgenommen. Der Käfig ist dabei an gekrümmten Wandabschnitten sowohl des Gelenkaußenteils als auch des Gelenkinnenteils geführt. Die Axialkräfte der Kugeln drücken somit den Käfig gegen dessen Führungsbahnen am Gelenkaußenteil und Gelenkinnenteil. In Abhängigkeit des zu übertragenden Drehmoments können hierbei Stützkräfte von einigen hundert Newton auftreten. Diese Kräfte wirken auf radial weit von den Beugeachsen des Gelenkaußenteils und Gelenkinnenteils beabstandete Kontaktflächen zwischen dem Käfig und den beiden Gelenkbauteilen, wodurch sich bei Beugung des Gelenks ein entsprechend hohes Reibmoment einstellt. Durch die bei Drehung des Gelenks entstehende Reibleistung wird der Wirkungsgrad des Gelenks begrenzt. Zudem führt die Reibung zu einer unerwünschten Erwärmung. Die Doppelpassung des Käfigs zum Gelenkaußenteil und Gelenkinnenteil erfordert zudem eine extrem hohe Fertigungsgenauigkeit.

Ein bekannter Ansatz zur Verbesserung des Wirkungsgrads besteht in sogenannten Gegenbahngelenken, bei denen durch abwechselnde Öffnungswinkel an in Umfangsrichtung aufeinanderfolgenden Kugellaufbahnpaaren an den Kugeln einander entgegengerichtete Axialkräfte erzeugt werden, die sich gegenseitig ausgleichen. Im Idealfall ist der Käfig hierdurch nach außen axialkraftfrei, das heißt die an diesem angreifenden Axialkräfte der Kugeln heben sich gegeneinander auf. Ein solches Gelenk wird beispielsweise in DE 10 2004 018 777 A1 beschrieben.

Ein Ausgleich der Axialkräfte der Kugeln kann auch bei sogenannten VL-Gelenken erzielt werden, bei denen sich die einander gegenüberliegenden Kugellaufbahnen am Gelenkaußenteil und am Gelenkinnenteil kreuzen. Derartige Gelenke sind unter anderem aus DE 10 2004 062 843 A1, DE 103 53 608 A1, DE 38 18 730 A1 und DE 31 02 871 A1 bekannt. Hierbei handelt es sich im Unterschied zu Gegenbahngelenken jedoch nicht um Festgelenke, sondern um Verschiebegelenke ohne festgelegtes Beugezentrum, welche einen Axialausgleich erlauben.

Durch eine axiale Festlegung des Käfigs kann ein Festgelenk mit gekreuzten Kugellaufbahnen erhalten werden. WO 01/61203 A2 beschreibt diesbezüglich eine Führung des Käfigs über sphärische Kontaktflächen sowohl am Gelenkaußenteil als auch am Gelenkinnenteil, wodurch allerdings die Reibung im Gelenk zunimmt.

Ein gattungsgemäßes Gleichlaufgelenk ist aus WO 2012/093537 A1 bekannt. Dieses weist zwei Gruppen von Kugellaufbahnpaaren auf, nämlich eine erste Gruppe, deren Kugellaufbahnen in einer die Mittelachse des jeweiligen Gelenkbauteils einschließenden Radialebene verlaufen, und eine zweite Gruppe, deren Kugellaufbahnen einander kreuzen. Alle Laufbahnen, und zwar unabhängig davon, ob diese zur ersten oder zweiten Gruppe gehören, weisen einen einzigen gemeinsamen Krümmungsmittelpunkt auf.

Der Erfindung liegt die Aufgabe zugrunde, einen für gelenkte Fahrzeugachsen geeigneten Gleichlaufgelenktyp mit hohem Wirkungsgrad, geringen Reibungsverluste und geringem Gewicht zu schaffen, der mit einem geringeren Bearbeitungsaufwand herstellbar ist.

Diese Aufgabe wird durch ein Gleichlaufgelenk gemäß Patentanspruch 1 gelöst.

Das erfindungsgemäße Gelenk weist gegenüber dem Stand der Technik eine Vielzahl von Vorteilen auf.

So ist beispielsweise keine genaue Bearbeitung der Käfiginnen- und außenflächen mehr erforderlich. Gleiches gilt für die Innenumfangsfläche des Gelenkaußenteils und die Außenumfangsfläche des Gelenkinnenteils, welche den Käfiginnen- und -außenflächen gegenüberliegen.

Zudem können die Kugellaufbahnen mit vergleichsweise moderaten Genauigkeitsanforderungen hergestellt werden.

Darüber hinaus können die auf den Käfig einwirkenden Kräfte der Kugeln gegeneinander ausgeglichen werden. Die Steuerwirkung wird weit überwiegend durch die Kugeln der Kugellaufbahnpaare der zweiten Gruppe bereitgestellt, wohingegen die Steuerwirkung der Kugeln der ersten Gruppe sehr klein oder sogar null ist. Die Belastung des Käfigs kann hierdurch sehr gering gehalten werden. Dadurch lässt sich der Käfig vergleichsweise schlank ausführen, was wiederum eine Gewichteinsparung und Kompaktierung der Bauweise des Gelenks ermöglicht.

Da der Käfig allenfalls lose an lediglich einem der Gelenkbauteile geführt ist, sind Reibflächen und Reibleistung gegenüber herkömmlichen Gelenken deutlich reduziert. Hierdurch wird der Gelenkwirkungsgrad verbessert. Zudem lässt sich der Käfig aus diesen Gründen besonders einfach und kostengünstig herstellen.

Bei Bedarf ist zudem eine gewisse axiale Verschiebbarkeit des Gelenks möglich.

Vorteilhafte Ausgestaltungen der Erfindung sind Gegenstand weiterer Patentansprüche.

Das Gelenk kann beispielsweise mit einem definierten Axialspiel ausgeführt werden, das durch feste innere Anschläge begrenzt ist. Dabei kann der axiale Verschiebeweg durch die festen Anschläge auf 2 mm begrenzt werden, so dass sich das Gelenk als radseitiges Festgelenk einsetzen lässt. Für eine optimale Funktion liegt dieses Axialspiel im Bereich von 0,02 mm bis 1 mm.

Gemäß einer weiteren vorteilhaften Ausgestaltung der Erfindung beträgt die Axiallänge des Käfigs weniger als das 0,45-fache des Käfigaußendurchmessers. Hierdurch ergeben sich ein besonders leichtgewichtiger Käfig sowie eine axial besonders kompakte Bauweise des Gelenks.

Die gekrümmten Kugellaufbahnen des Kugellaufbahnpaares der ersten Gruppe können prinzipiell in herkömmlicher Art und Weise wie von Rzeppagelenken der eingangs genannten Art bekannt hergestellt werden. Bei derartigen Gelenken erfolgt eine Steuerung des Käfigs in die Halbwinkelebene durch einen axialen Offset der Krümmungsmittelpunkte der Kugellaufbahnen und/oder durch einen axialen Offset der Käfigführung, was jedoch jeweils mit einer Zunahme der inneren Reibung des Gelenks verbunden ist. Vorliegend wird, wie oben bereits erläutert, auf eine enge Käfigführung und damit auf einen axialen Offset der Käfigführung als Steuerungsmöglichkeit verzichtet. Jedoch ist in einem gewissen Umfang ein axialer Offset der Krümmungsmittelpunkte der Kugellaufbahnen zulässig. Im Hinblick auf einen hohen Wirkungsgrad ist es jedoch von Vorteil, wenn die Krümmungsmittelpunkte der gekrümmten Kugellaufbahnen der Kugellaufbahnpaares der ersten Gruppe einen axialen Offset aufweisen, der kleiner als 1/30 des Rollkreisdurchmessers der Kugellaufbahnen der ersten Gruppe oder sogar 0 ist. Dies ermöglicht eine weitere Wirkungsgradverbesserung, zumal die zur Vermeidung eines Verklemmens notwendige Steuerfunktion für den Käfig durch die Kugellaufbahnpaare der zweiten Gruppe bereitgestellt wird.

Gemäß einer weiteren vorteilhaften Ausgestaltung der Erfindung sind die gekrümmten Kugellaufbahnen eines Kugellaufbahnpaares der ersten Gruppe kreisbogenförmig gekrümmt, wodurch sich diese besonders einfach herstellen lassen.

Weiterhin kann der Verlauf der gekrümmten Kugellaufbahnen eines Kugellaufbahnpaares der ersten Gruppe eine zur Mittelachse des gestreckten Gelenks senkrechte Symmetrieebene aufweisen, wobei die Symmetrieebene zur Kompensation eines axialen Spiels bis zu 1,5 mm vom Gelenkmittelpunkt entfernt sein kann. Vorzugsweise kann dieser Abstand größer als 0,05 mm gewählt werden.

Gemäß einer weiteren vorteilhaften Ausgestaltung der Erfindung sind die Kugellaufbahnen der ersten und zweiten Gruppe in Umfangsrichtung abwechselnd angeordnet. Die begünstigt eine gleichmäßige Kraftübertragung.

Ferner können die Kugellaufbahnen der zweiten Gruppe in Umfangsrichtung abwechselnd nach links und nach rechts geschrägt sein, wodurch ein guter Kraftausgleich am Käfig erzielt wird. Dabei liegt der Schrägungswinkel der Kugellaufbahnen der zweiten Gruppe vorzugsweise im Bereich von 8° bis 16°.

Gemäß einer weiteren vorteilhaften Ausgestaltung der Erfindung weisen die Kugellaufbahnpaare der ersten Gruppe einen größeren Rollkreisdurchmesser auf als die Kugellaufbahnpaare der zweiten Gruppe. Dies ermöglicht zum einen eine gleichmäßigere Flächenpressung aller Laufbahnen. Zum anderen kann der Käfig radial schlanker ausgeführt werden, da der radiale Weg der Kugeln entlang der Käfigkontaktflächen in den Käfigfenstern für die Kugeln der ersten und zweiten Gruppe optimal ausgelegt werden kann. Hierdurch wird eine größere Umschlingung der Kugeln in den Laufbahnen des Gelenkinnenteils erzielt. Beide Effekte erhöhen die Lebensdauer des Gelenks.

Mit dem vorstehend erläuterten Gleichlaufgelenk lassen sich maximale Beugewinkel von mehr als 40 Grad erreichen, so dass dieses beispielsweise als radseitiges Festgelenk an einer gelenkten Fahrzeugachse einsetzbar ist.

Die Erfindung wird nachfolgend anhand eines in der Zeichnung dargestellten Ausführungsbeispiels näher erläutert. Die Zeichnung zeigt in:
- Fig. 1: eine Längsschnittansicht eines Ausführungsbeispiels eines Gleichlaufgelenks nach der Erfindung,
- Fig. 2: eine weitere Längsschnittansicht des Gleichlaufgelenks in einer gegenüber Fig. 1 um 45° verdrehten Schnittebene,
- Fig. 3: eine Ansicht in Richtung der offenen Seite des Gelenkaußenteils,
- Fig. 4: eine Abwicklung des Innenumfangs des Gelenkaußenteils in schematischer Darstellung,
- Fig. 5: eine Abwicklung des Außenumfangs des Gelenkinnenteils in schematischer Darstellung,

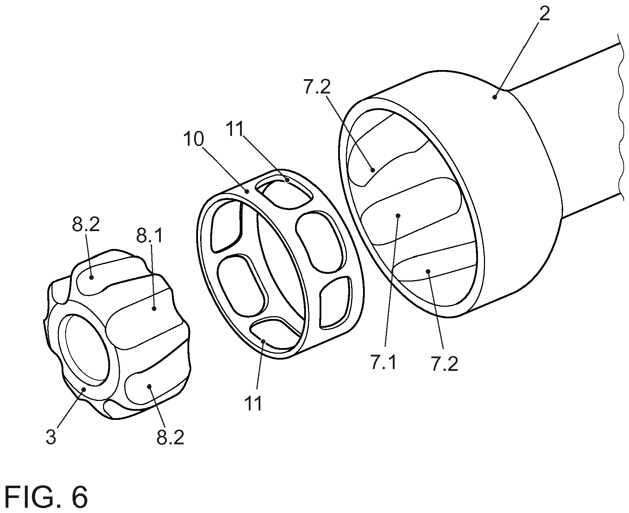

- Fig. 6: eine Explosionsdarstellung des Gelenks ohne Kugeln,
- Fig. 7: eine Detailansicht für eine axiale Wegbegrenzung zwischen dem Käfig und dem Gelenkinnenteil, und in
- Fig. 8: eine axiale Wegbegrenzung zwischen dem Käfig und dem Gelenkaußenteil.

Das Ausführungsbeispiel zeigt ein Gleichlaufgelenk 1 mit zwei Gelenkbauteilen, nämlich einem Gelenkaußenteil 2 und einem Gelenkinnenteil 3.

Das Gelenkinnenteil 3 ist in dem glockenförmigen ausgebildeten Gelenkaußenteil 2 angeordnet und weist eine Innenverzahnung zum Anschluss einer Welle oder dergleichen auf.

Am Innenumfang 4 des Gelenkaußenteil 2 sowie am Außenumfang 5 des Gelenkinnenteils 3 sind jeweils eine Vielzahl, beispielsweise acht oder sechzehn Kugellaufbahnen 7 und 8 ausgebildet, die jeweils paarweise einander gegenüberliegen. Jeweils eine Kugellaufbahn 7 am Gelenkaußenteil 2 und eine Kugellaufbahn 8 am Gelenkinnenteil 3 bilden ein Kugellaufbahnpaar. In jedem Kugellaufbahnpaar ist jeweils eine Kugel 9 aufgenommen.

Zwischen dem Gelenkaußenteil 2 und dem Gelenkinnenteil 3 ist weiterhin ein Käfig 10 angeordnet, der an seinem Umfang eine Vielzahl von Fenstern 11 aufweist. In diesen Fenstern 11 ist jeweils eine Kugel 9 angeordnet, die in einem Kugellaufbahnpaar gehalten ist, um Drehmomente zwischen dem Gelenkaußenteil 2 und dem Gelenkinnenteil 3 zu übertragen.

Das Gleichlaufgelenk 1 weist zwei Gruppen unterschiedlicher Kugellaufbahnpaare auf.

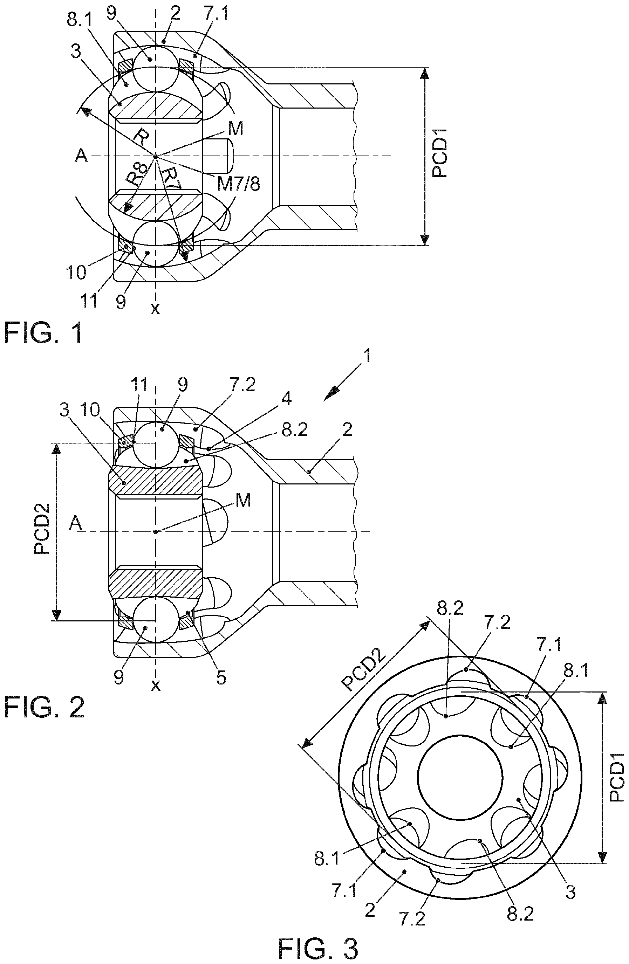

Eine erste Gruppe von Kugellaufbahnpaaren wird durch gekrümmten Kugellaufbahnen 7.1 und 8.1 gebildet, die jeweils in einer die Mittelachse A des jeweiligen Gelenkbauteils einschließenden Radialebene verlaufen, wie dies in Fig. 1 dargestellt ist.

Die gekrümmten Kugellaufbahnen 7.1 und 8.1 sind, wie in den Figuren 1 und 2 gezeigt, kreisbogenförmig ausgebildet, wobei auch geringfügige Abweichungen von der Kreisbogenform möglich sind, das heißt die Kugellaufbahnen 7.1 und 8.1 auch annähernd kreisbogenförmig ausgebildet sein können.

Zudem weist der Verlauf der gekrümmten Kugellaufbahnen 7.1 und 8.1 eines Kugellaufbahnpaares der ersten Gruppe eine zur Mittelachse A des gestreckten Gelenks senkrechte Symmetrieebene X auf. Diese Symmetrieebene X ist vorzugsweise maximal um 1/50 des Rollkreisdurchmessers PDC1 der Kugellaufbahnpaare der ersten Gruppe vom Gelenkmittelpunkt M entfernt ist.

Der Abstand der Symmetrieebene X vom Gelenkmittelpunkt M beträgt maximal 1,5 mm.

Die Krümmungsmittelpunkte M7 und M8 der gekrümmten Kugellaufbahnen 7.1 und 8.1 fallen bei dem dargestellten Ausführungsbeispiel im Gelenkmittelpunkt M zusammen. Der axiale Offset zwischen den Krümmungsmittelpunkten M7 und M8 ist somit Null. In diesem Fall üben die Kugellaufbahnpaare der ersten Gruppe keine Steuerfunktion auf den Käfig 10 aus.

Jedoch kann zwischen den Krümmungsmittelpunkten M7 und M8 ein geringfügiger axialer Offset zugelassen werden, solange dieser kleiner als 0,5 mm ist, wodurch der Steueranteil der ersten Gruppe klein bleibt.

Der Käfig 10 ist von dem Gelenkinnenteil 3 beabstandet und an dem Gelenkaußenteil 2 lediglich lose geführt. Hierdurch ergibt sich ein axiales Spiel im Gelenk, das durch feste Anschläge auf ein maximales Axialspiel von beispielsweise 2 mm begrenzt werden kann. Vorzugsweise liegt das Axialspiel im Bereich von 0,2 mm bis 1 mm.

In Abwandlung des dargestellten Ausführungsbeispiels kann der Käfig 10 auch deutlich von dem Gelenkaußenteil 2 beabstandet und lose am Gelenkinnenteil 3 geführt sein. Auch in diesem Fall erfolgt die Führung mit einer weiten Spielpassung. Diese lose Führung trägt nicht oder allenfalls sehr geringfügig zur Steuerung des Käfigs 10 in die Halbwinkelebene bei einer Beugung des Gelenks bei.

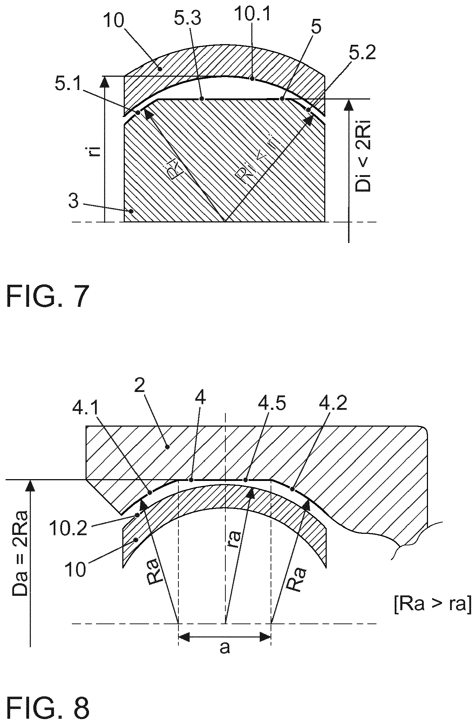

Fig. 7 zeigt beispielhaft eine erste Möglichkeit zur Begrenzung des Axialspiels des Gelenks durch entsprechende Kugelabschnittsflächen 5.1 und 5.2 am Außenumfang 5 des Gelenkinnenteils 3, welche einer Kugelabschnittsfläche 10.1 am Innenumfang des Käfigs 10 durch einen Spalt beabstandet gegenüber liegen. Die Kugelabschnittsflächen 5.1 und 5.2 des Gelenkinnenteils 3 sind durch einen vorzugsweise weniger stark gekrümmten oder geraden Zwischenabschnitt 5.3 miteinander verbunden. Die Kugelabschnittsflächen 5.1 und 5.2 des Gelenkinnenteils 3 weisen einen Krümmungsradius Ri auf, der kleiner ist als der Krümmungsradius ri der Kugelabschnittsfläche 10.1 am Innenumfang des Käfigs 10. Die maximale Weite Di des Zwischenabschnitts 5.3 ist vorzugsweise kleiner als der doppelte Krümmungsradius Ri. Jedoch kann der Außenumfang 5 des Gelenkinnenteils 3 auch durchgängig mit dem Krümmungsradius Ri ausgeführt werden.

Eine weitere Möglichkeit zur Begrenzung des Axialspiels ist in Fig. 8 gezeigt. In diesem Fall erfolgt die Begrenzung über Kugelflächenabschnitte zwischen dem Gelenkaußenteil 2 und dem Käfig 10. Dabei liegen Kugelabschnittsflächen 4.1 und 4.2 am Innenumfang 4 des Gelenkinnenteils 2 einer Kugelabschnittsfläche 10.2 am Außenumfang des Käfigs 10 durch einen Spalt beabstandet gegenüber. Die Kugelabschnittsflächen 4.1 und 4.2 des Gelenkinnenteils 2 weisen mit Ra einen größeren Krümmungsradius auf als die äußere Kugelabschnittsfläche 10.2 des Käfigs 10 mit ra. Ferner sind die Kugelabschnittsflächen 4.1 und 4.2 durch einen Zwischenabschnitt 4.3 mit größerem, insbesondere unendlichem Krümmungsradius verbunden, wobei die lichte Weite Da am Zwischenabschnitt 4.3 etwa das Doppelte des Krümmungsradius Ra der Kugelabschnittsflächen 4.1 und 4.2 des Gelenkinnenteils 2 beträgt. Die Krümmungsmittelpunkte der Kugelabschnittsflächen 4.1 und 4.2 des Gelenkinnenteils 2 können axial durch einen Abstand a voneinander beabstandet sein. Ist der Abstand a hinreichend groß, kann Ra auch gleich oder kleiner als ra gewählt werden.

Es muss betont werden, dass die in den Fig. 7 und 8 dargestellten Axialbegrenzungen lediglich beispielhafter Natur sind, da eine Vielzahl von inneren Anschlägen zur Axialbegrenzung möglich sind. So kann beispielsweise eine Begrenzung in einer Richtung gemäß Fig. 7 und in die entgegengesetzten Richtung gemäß Fig. 8 vorgenommen sein oder es können am Innen- oder Außenumfang des Käfigs 10 jeweils Kugelfläche mit unterschiedlichen Krümmungsradien axial nebeneinander liegend vorgesehen sein. In sämtlichen Fällen wird ein Axialspiel gewährleistet, wobei gleichzeitig der Käfig 10 an einem der beiden Gelenkbauteile 2 oder 3 allenfalls lose geführt und von dem anderen Gelenkbauteil 3 bzw. 2 beabstandet ist.

Der wesentliche Anteil der Steuerfunktion des Käfigs 10 übernimmt eine zweite Gruppe von Kugellaufbahnpaaren, deren Kugellaufbahnen 7.2 und 8.2 jeweils gerade verlaufen und einander kreuzen. Diese sind in Fig. 2 näher dargestellt. Dabei weisen Kugellaufbahnpaare der zweiten Gruppe einen kleineren Rollkreisdurchmesser PCD2 auf als die Kugellaufbahnpaare der ersten Gruppe mit größerem Rollkreisdurchmesser PCD1.

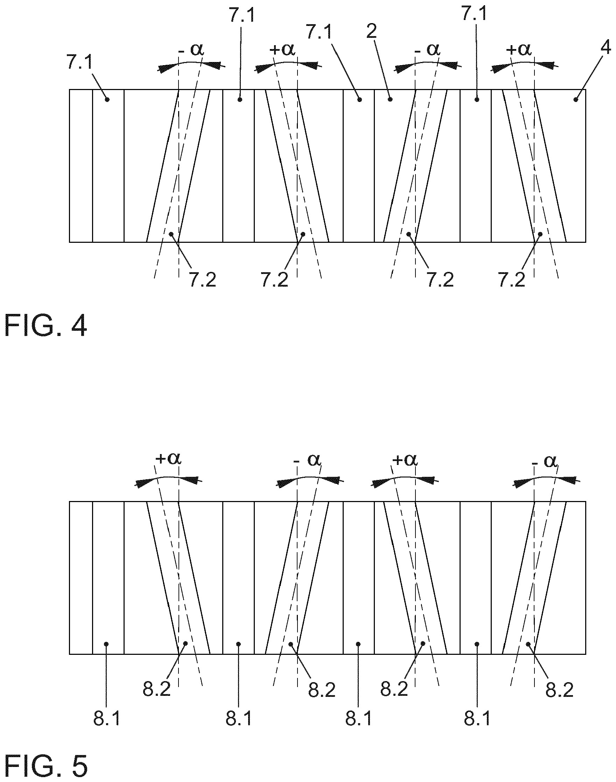

Anhand der Abwicklungen des Innenumfangs 4 des Gelenkaußenteils 2 und des Außenumfangs 5 des Gelenkinnenteils 3 in den Figuren 4 und 5 ist zu erkennen, dass die Kugellaufbahnen 7.2 und 8.2 der zweiten Gruppe in Umfangsrichtung abwechselnd nach links und nach rechts geschrägt sind. Dabei weisen die Kugellaufbahnen 7.2 und 8.2 eines solchen Kugellaufbahnpaares betragsgleiche, jedoch richtungsverschiedene Schrägungswinkel α zur Mittelachse A der Gelenkbauteile auf. Vorzugsweise weisen alle Kugellaufbahnen 7.2 und 8.2 der zweiten Gruppe dem Betrag nach gleiche Schrägungswinkel α auf. Hierdurch gleichen sich bei einer Beugung des Gelenks die auf den Käfig 10 einwirkenden Steuerkräfte der Kugeln 9 in den Kugellaufbahnpaaren der zweiten Gruppe axial gegen einander aus.

Im Hinblick auf eine gleichmäßige Kraftverteilung können zu diesem Zweck die Kugellaufbahnen der ersten und zweiten Gruppe in Umfangsrichtung abwechselnd angeordnet werden.

Die Fenster 11 für die Kugeln 9 der ersten Gruppe können in Umfangsrichtung mit geringerer Länge ausgeführt werden als die Fenster 11 für die Kugeln 9 der zweiten Gruppe.

Aufgrund der geringen Belastung des Käfigs 10 im Hinblick auf die Steuerfunktion sowie aufgrund der minimalen Reibungsschnittstellen zu den Gelenkbauteilen kann der Käfig 10 vergleichsweise schlank ausgeführt werden. Insbesondere kann die Axiallänge des Käfigs 10 weniger als das 0,45-fache des Käfigaußendurchmessers betragen.

Dies gestattet eine in Axialrichtung kompakte Bauweise des Gelenks.

Zudem kann der Käfig 10 besonders leicht ausgeführt werden, wodurch das Gesamtgewicht des Gelenks verringert werden kann.

Da der Käfig 10 allenfalls lose an einem der Gelenkbauteile geführt wird, wird der Bearbeitungsaufwand an den betreffenden Flächen am Außen- und Innenumfang des Käfigs 10 sowie an den korrespondierenden Gegenflächen an den Gelenkbauteilen 2 und 3 erheblich reduziert, da im Vergleich zu herkömmlichen UF/RF Gelenken mangels der bei diesen erforderlichen Doppelpassung die Anforderungen an die Fertigungsgenauigkeit erheblich geringer sind.

Es ergibt sich somit ein besonders leichtgewichtiges und einfach und kostengünstig zu fertigendes Gleichlaufgelenk mit besonders hohem Wirkungsgrad und besonders geringer innerer Reibung.

Dieses eignet sich insbesondere zum Einsatz ein Kraftfahrzeug-Seitenwellen, da maximale Beugewinkel von mehr als 40 Grad erreicht werden können.

Die Erfindung wurde vorstehend anhand eines Ausführungsbeispiels näher erläutert. Sie ist jedoch nicht darauf beschränkt, sondern umfasst alle durch die Patentansprüche definierten Ausgestaltungen.

### Bezugszeichenliste

- 1: Gleichlaufgelenk
- 2: Gelenkaußenteil
- 3: Gelenkinnenteil
- 4: Innenumfang des Gelenkaußenteils
- 4.1: Kugelflächenabschnitt
- 4.2: Kugelflächenabschnitt
- 4.3: Zwischenabschnitt
- 5: Außenumfang des Gelenkinnenteils
- 5.1: Kugelflächenabschnitt
- 5.2: Kugelflächenabschnitt
- 5.3: Zwischenabschnitt
- 7: Kugellaufbahn des Gelenkaußenteils
- 7.1: Kugellaufbahn des Gelenkaußenteils - erste Gruppe
- 7.2: Kugellaufbahn des Gelenkaußenteils - zweite Gruppe
- 8: Kugellaufbahn des Gelenkinnenteils
- 8.1: Kugellaufbahn des Gelenkinnenteils - erste Gruppe
- 8.2: Kugellaufbahn des Gelenkinnenteils - zweite Gruppe
- 9: Kugel
- 10: Käfig
- 10.1: innerer Kugelflächenabschnitt
- 10.2: äußerer Kugelflächenabschnitt
- 11: Fenster
- a: Abstand
- A: Mittelachse der Gelenkbauteile
- Da: Weite des Zwischenabschnitts 4.3
- Di: Weite des Zwischenabschnitts 5.3
- M: Gelenkmittelpunkt und Beugezentrum
- M7: Krümmungsmittelpunkt der gekrümmten Kugellaufbahn des Gelenkaußenteils der ersten Gruppe
- M8: Krümmungsmittelpunkt der gekrümmten Kugellaufbahn des Gelenkinnenteils der ersten Gruppe
- PCD1: Rollkreisdurchmesser der Kugellaufbahnpaare der zweiten Gruppe
- PCD2: Rollkreisdurchmesser der Kugellaufbahnpaare der zweiten Gruppe
- R: Krümmungsradius der Bahn des Mittelpunkts einer Kugel in einem Kugellaufbahnpaar der ersten Gruppe
- ra: Krümmungsradius des Kugelflächenabschnitts 10.2
- ri: Krümmungsradius des Kugelflächenabschnitts 10.1
- Ra: Krümmungsradius der Kugelflächenabschnitte 4.1 und 4.2
- Ri: Krümmungsradius der Kugelflächenabschnitte 5.1 und 5.2
- R7: Krümmungsradius der gekrümmten Kugellaufbahn des Gelenkaußenteils der ersten Gruppe
- R8: Krümmungsradius der gekrümmten Kugellaufbahn des Gelenkinnenteils der ersten Gruppe
- X: Symmetrieebene
- α: Schrägungswinkel

## Patentansprüche

1. Gleichlaufgelenk, umfassend:
ein Gelenkaußenteil (2) mit Kugellaufbahnen (7) am Innenumfang (4),
ein Gelenkinnenteil (3) mit Kugellaufbahnen (8) am Außenumfang (5),
wobei jeweils eine Kugellaufbahn (7) am Gelenkaußenteil (2) und eine Kugellaufbahn (8) am Gelenkinnenteil (3) ein Kugellaufbahnpaar bilden,
eine Kugel (9) je Kugellaufbahnpaar,
einen Käfig (10), der zwischen dem Gelenkaußenteil (2) und dem Gelenkinnenteil (3) angeordnet ist und Fenster (11) aufweist, in denen die Kugeln (9) aufgenommen sind, und eine erste Gruppe von Kugellaufbahnpaaren, deren Kugellaufbahnen (7.1, 8.1) gekrümmt sind und in einer die Mittelachse (A) des jeweiligen Gelenkbauteils einschließenden Radialebene verlaufen, und
**gekennzeichnet durch**
eine zweite Gruppe von Kugellaufbahnpaaren, deren Kugellaufbahnen (7.2, 8.2) jeweils gerade verlaufen und einander kreuzen,
wobei der Käfig (10) an einem der beiden Gelenkbauteile (2, 3) lose geführt und von dem anderen Gelenkbauteil (3, 2) beabstandet ist.

2. Gleichlaufgelenk nach Anspruch 1, **dadurch gekennzeichnet, dass** das Gelenk ein definiertes Axialspiel aufweist, das durch feste innere Anschläge begrenzt ist und maximal 2 mm beträgt.

3. Gleichlaufgelenk nach Anspruch 1 oder 2, **dadurch gekennzeichnet, dass** die Krümmungsmittelpunkte (M7, M8) der gekrümmten Kugellaufbahnen (7.1, 8.1) eines Kugellaufbahnpaares der ersten Gruppe einen axialen Offset aufweisen, der kleiner als 1/30 des Rollkreisdurchmessers (PCD1) oder 0 ist.

4. Gleichlaufgelenk nach einem der Ansprüche 1 bis 3, **dadurch gekennzeichnet, dass** die gekrümmten Kugellaufbahnen (7.1, 8.1) eines Kugellaufbahnpaares der ersten Gruppe kreisbogenförmig gekrümmt sind.

5. Gleichlaufgelenk nach einem der Ansprüche 1 bis 4, **dadurch gekennzeichnet, dass** der Verlauf der gekrümmten Kugellaufbahnen (7.1, 8.1) eines Kugellaufbahnpaares der ersten Gruppe eine zur Mittelachse des gestreckten Gelenks senkrechte Symmetrieebene (X) aufweist und die Symmetrieebene (X) von 0,05 mm bis 1,5 mm von einem Gelenkmittelpunkt (M) entfernt ist.

6. Gleichlaufgelenk nach einem der Ansprüche 1 bis 5, **dadurch gekennzeichnet, dass** die Kugellaufbahnen (7.1, 7.2, 8.1, 8.2) der ersten und zweiten Gruppe in Umfangsrichtung abwechselnd angeordnet sind.

7. Gleichlaufgelenk nach einem der Ansprüche 1 bis 6, **dadurch gekennzeichnet, dass** die Kugellaufbahnen der zweiten Gruppe (7.2, 8.2) in Umfangsrichtung abwechselnd nach links und nach rechts geschrägt sind.

8. Gleichlaufgelenk nach einem der Ansprüche 1 bis 7, **dadurch gekennzeichnet, dass** der Schrägungswinkel der Kugellaufbahnen (7.2, 8.2) der zweite Gruppe 8° bis 16° beträgt.

9. Gleichlaufgelenk nach einem der Ansprüche 1 bis 8, **dadurch gekennzeichnet, dass** die Kugellaufbahnpaare der ersten Gruppe (7.1, 8.1) einen größeren Rollkreisdurchmesser (PCD1) aufweisen als die Kugellaufbahnpaare (7.2, 8.2) der zweiten Gruppe.

10. Gleichlaufgelenk nach einem der Ansprüche 1 bis 9, **dadurch gekennzeichnet, dass** der maximale Beugewinkel des Gelenks größer als 40 Grad ist.

11. Gleichlaufgelenk nach einem der Ansprüche 1 bis 10, **dadurch gekennzeichnet, dass** die Fenster (11) zur Aufnahme der Kugeln (9) der ersten Gruppe in Umfangsrichtung eine geringere Länge aufweisen als die Fenster (11) zur Aufnahme der Kugeln (9) der zweiten Gruppe.

## Claims

1. Constant velocity joint, comprising:
a joint outer part (2) with ball raceways (7) on the inner circumference (4),
a joint inner part (3) with ball raceways (8) on the outer circumference (5),
in each case one ball raceway (7) on the joint outer part (2) and one ball raceway (8) on the joint inner part (3) forming a ball raceway pair, one ball (9) per ball raceway pair,
a cage (10) which is arranged between the joint outer part (2) and the joint inner part (3) and has windows (11), in which the balls (9) are received, and a first group of ball raceway pairs, the ball raceways (7.1, 8.1) of which are curved and run in a radial plane which includes the centre axis (A) of the respective joint component, and
**characterized by**
a second group of ball raceway pairs, the ball raceways (7.2, 8.2) of which in each case run in a straight line and cross one another,
the cage (10) being guided loosely on one of the two joint components (2, 3) and being spaced apart from the other joint component (3, 2).

2. Constant velocity joint according to Claim 1, **characterized in that** the joint has a defined axial play which is limited by way of fixed inner stops and is at most 2 mm.

3. Constant velocity joint according to Claim 1 or 2, **characterized in that** the curvature centre points (M7, M8) of the curved ball raceways (7.1, 8.1) of a ball raceway pair of the first group have an axial offset which is less than 1/30 of the rolling pitch circle diameter (PCD1) or is 0.

4. Constant velocity joint according to one of Claims 1 to 3, **characterized in that** the curved ball raceways (7.1, 8.1) of a ball raceway pair of the first group are curved arcuately.

5. Constant velocity joint according to one of Claims 1 to 4, **characterized in that** the course of the curved ball raceways (7.1, 8.1) of a ball raceway pair of the first group has a plane of symmetry (X) which is perpendicular with respect to the centre axis of the elongate joint, and the plane of symmetry (X) is spaced apart from a joint centre point (M) by from 0.05 mm to 1.5 mm.

6. Constant velocity joint according to one of Claims 1 to 5, **characterized in that** the ball raceways (7.1, 7.2, 8.1, 8.2) of the first and second group are arranged so as to alternate in the circumferential direction.

7. Constant velocity joint according to one of Claims 1 to 6, **characterized in that** the ball raceways of the second group (7.2, 8.2) are bevelled to the left and to the right so as to alternate in the circumferential direction.

8. Constant velocity joint according to one of Claims 1 to 7, **characterized in that** the bevel angle of the ball raceways (7.2, 8.2) of the second group is from 8° to 16°.

9. Constant velocity joint according to one of Claims 1 to 8, **characterized in that** the ball raceway pairs of the first group (7.1, 8.1) have a greater rolling pitch circle diameter (PCD1) than the ball raceway pairs (7.2, 8.2) of the second group.

10. Constant velocity joint according to one of Claims 1 to 9, **characterized in that** the maximum articulation angle of the joint is greater than 40 degrees.

11. Constant velocity joint according to one of Claims 1 to 10, **characterized in that** the windows (11) for receiving the balls (9) of the first group have a smaller length in the circumferential direction than the windows (11) for receiving the balls (9) of the second group.

## Revendications

1. Joint homocinétique, comprenant:
une partie de joint extérieure (2) avec des voies de roulement de billes (7) à la périphérie intérieure (4),
une partie de joint intérieure (3) avec des voies de roulement de billes (8) à la périphérie extérieure (5),
dans lequel une voie de roulement de billes (7) sur la partie de joint extérieure (2) et une voie de roulement de billes (8) sur la partie de joint intérieure (3) respectivement forment une paire de voies de roulement de billes,
une bille (9) par paire de voies de roulement de billes,
une cage (10), qui est disposée entre la partie de joint extérieure (2) et la partie de joint intérieure (3) et qui présente des fenêtres (11), dans lesquelles les billes (9) sont logées, et
un premier groupe de paires de voies de roulement de billes, dont les voies de roulement de billes (7.1, 8.1) sont courbes et s'étendent dans un plan radial contenant l'axe central (A) de la partie de joint respective, et
**caractérisé par**
un deuxième groupe de paires de voies de roulement de billes, dont les voies de roulement de billes (7.2, 8.2) sont respectivement droites et se croisent mutuellement,
dans lequel la cage (10) est guidée librement sur une des deux parties de joint (2, 3) et est espacée de l'autre partie de joint (3, 2).

2. Joint homocinétique selon la revendication 1, **caractérisé en ce que** le joint présente un jeu axial défini, qui est limité par des butées intérieures fixes et qui vaut au maximum 2 mm.

3. Joint homocinétique selon la revendication 1 ou 2, **caractérisé en ce que** les centres de courbure (M7, M8) des voies de roulement de billes courbes (7.1, 8.1) d'une paire de voies de roulement de billes du premier groupe présentent un décalage axial, qui est inférieur à 1/30 du diamètre du cercle de roulement (PCD1) ou qui vaut 0.

4. Joint homocinétique selon l'une quelconque des revendications 1 à 3, **caractérisé en ce que** les voies de roulement de billes courbes (7.1, 8.1) d'une paire de voies de roulement de billes du premier groupe sont incurvées en forme d'arc de cercle.

5. Joint homocinétique selon l'une quelconque des revendications 1 à 4, **caractérisé en ce que** l'allure des voies de roulement de billes courbes (7.1, 8.1) d'une paire de voies de roulement de billes du premier groupe présente un plan de symétrie (X) perpendiculaire à l'axe central du joint étendu et le plan de symétrie (X) est éloigné de 0,05 mm à 1,5 mm d'un point central (M) du joint.

6. Joint homocinétique selon l'une quelconque des revendications 1 à 5, **caractérisé en ce que** les voies de roulement de billes (7.1, 7.2, 8.1, 8.2) du premier et du deuxième groupes sont disposées en alternance dans la direction périphérique.

7. Joint homocinétique selon l'une quelconque des revendications 1 à 6, **caractérisé en ce que** les voies de roulement de billes du deuxième groupe (7.2, 8.2) sont inclinées en alternance vers la gauche et vers la droite dans la direction périphérique.

8. Joint homocinétique selon l'une quelconque des revendications 1 à 7, **caractérisé en ce que** l'angle d'inclinaison des voies de roulement de billes (7.2, 8.2) du deuxième groupe vaut de 8° à 16°.

9. Joint homocinétique selon l'une quelconque des revendications 1 à 8, **caractérisé en ce que** les paires de voies de roulement de billes du premier groupe (7.1, 8.1) présentent un plus grand diamètre de cercle de roulement (PCD1) que les paires de voies de roulement de billes (7.2, 8.2) du deuxième groupe.

10. Joint homocinétique selon l'une quelconque des revendications 1 à 9, **caractérisé en ce que** l'angle de flexion maximal du joint est supérieur à 40 degrés.

11. Joint homocinétique selon l'une quelconque des revendications 1 à 10, **caractérisé en ce que** les fenêtres (11) destinées à recevoir les billes (9) du premier groupe présentent en direction périphérique une plus petite longueur que les fenêtres (11) destinées à recevoir les billes (9) du deuxième groupe.
